(19) **Europäisches Patentamt / European Patent Office / Office européen des brevets**

(11) **EP 1 624 991 B1**

(12) **FASCICULE DE BREVET EUROPEEN**

(45) Date de publication et mention de la délivrance du brevet:
**26.10.2011 Bulletin 2011/43**

(21) Numéro de dépôt: **04730452.2**

(22) Date de dépôt: **30.04.2004**

(51) Int Cl.:
**B23H 7/04** *(2006.01)* **B23H 1/02** *(2006.01)*

(86) Numéro de dépôt international:
**PCT/CH2004/000264**

(87) Numéro de publication internationale:
**WO 2004/103626 (02.12.2004 Gazette 2004/49)**

(54) **DISPOSITIF D'USINAGE PAR ELECTROEROSION**

FUNKENEROSIONSVORRICHTUNG

DEVICE FOR MACHINING BY ELECTROEROSION

(84) Etats contractants désignés:
**AT BE BG CH CY CZ DE DK EE ES FI FR GB GR HU IE IT LI LU MC NL PL PT RO SE SI SK TR**

(30) Priorité: **22.05.2003 CH 92003**

(43) Date de publication de la demande:
**15.02.2006 Bulletin 2006/07**

(73) Titulaire: **Agie Charmilles SA**
**6616 Losone (CH)**

(72) Inventeurs:
• **JAQUES, Fabrice**
  **Ch-1217 Meyrin (CH)**
• **DORTHE, Sebastian**
  **CH-1608 Chesalles sur Oron (CH)**
• **TOGNOLINI, Maurizio**
  **CH-1269 Bassins (CH)**
• **DEMULE, Guy**
  **F-74800 Cornier (FR)**
• **BÜHLER, Ernesto**
  **CH-6616 Losone (CH)**

(74) Mandataire: **De Colle, Piergiacomo et al**
**Georg Fischer AG**
**Amsler-Laffon-Strasse 9**
**8201 Schaffhausen (CH)**

(56) Documents cités:
**EP-A- 0 392 074      EP-A- 1 193 016**
**US-A- 4 661 674      US-A- 5 585 014**

• **PATENT ABSTRACTS OF JAPAN vol. 013, no. 573 (M-909), 19 décembre 1989 (1989-12-19) -& JP 01 240223 A (MITSUBISHI ELECTRIC CORP), 25 septembre 1989 (1989-09-25)**

EP 1 624 991 B1

**Description**

La présente invention concerne un dispositif d'usinage par électroérosion comprenant une électrode-outil et une électrode-pièce constituant les pôles d'un gap d'usinage, au moins une source de tension/courant reliée par un circuit électrique à l'électrode-outil et à l'électrode-pièce et agencée pour générer des impulsions électriques et pour établir l'amorçage de décharges électriques entre l'électrode-outil et l'électrode-pièce.

En particulier l'électrode-outil utilisée peut être un fil tendu entre deux guides. Il sera principalement question ci-après d'usinages de superfinition par électroérosion à l'aide d'un fil-électrode permettant d'obtenir les états de surface les plus fins.

Pour découper une pièce par électroérosion à l'aide d'un fil, on procède habituellement en plusieurs passes ; d'abord la passe d'ébauche ouvre un passage au fil ; l'état de surface obtenu est très rugueux ; d'autre part la cote obtenue est volontairement surdimensionnée pour permettre aux passes suivantes, de finition et de superfinition, d'approcher la cote finale et d'affiner l'état de surface.

La plupart des machines d'usinage par électroérosion comportent deux générateurs de tension/courant; l'un destiné à favoriser l'amorçage des décharges; l'autre plus puissant destiné à fournir l'énergie des décharges les plus érosives. En régime de superfinition on veut réduire la rugosité des surfaces obtenues par électroérosion donc diminuer l'énergie des décharges érosives. Par conséquent on travaille habituellement avec le seul générateur dit d'amorçage, les relais connectant le générateur de puissance à la zone d'usinage restant ouverts.

On rencontre ici un problème lié aux lignes de courant qui relient le ou les générateurs à la pièce et à l'électrode-fil. Ces lignes sont habituellement des câbles coaxiaux dont la propriété essentielle est d'avoir une inductance faible qui permet au générateur d'ébauche de produire des impulsions de courant très raides de l'ordre de 1000 ampères par microseconde. Cependant, cette faible inductance des lignes n'est plus un avantage décisif lors des régimes de finition. Pire encore, les câbles coaxiaux comportent des capacités réparties importantes qui constituent des réservoirs d'énergie incompatibles avec les régimes de finition.

Dans le métier, il est connu que le générateur d'amorçage applique au gap d'usinage une tension suffisamment élevée pour provoquer l'amorçage sans pouvoir fournir un grand courant, alors que le générateur d'ébauche se comporte comme une puissante source de courant dès que la décharge est amorcée. Le générateur d'amorçage applique une tension, par exemple, de 80 à 240 V, durant un temps indéterminé jusqu'à ce que le phénomène d'avalanche souvent décrit se produise. En superfinition, l'énergie totale de la décharge ne dépend pas seulement de l'impulsion de courant, si petite soit-elle, fournie par le générateur d'amorçage, mais dépend surtout de la somme des énergies contenues dans les capacités réparties, connectées aux bornes du gap, et soumises à la tension d'amorçage, capacités qui vident leurs énergies dans le canal ionisé dès que l'étincelle s'amorce.

Le problème principal de l'usinage en superfinition consiste à localiser les capacités parasites qui peuvent décharger leur énergie à travers le gap lorsque l'étincelle s'amorce, ensuite à bloquer ou atténuer cette énergie. La demande de brevet EP 1 193 016 A2 illustre quelques cas de figure typiques. Notamment sur la figure 1 de ce document, pour chacune des capacités parasites représentées, on peut trouver une boucle de courant passant à travers le gap, boucle de courant par laquelle l'énergie de la capacité considérée peut être transférée dans la décharge érosive quand celle-ci s'amorce. En ouvrant les interrupteurs disposés entre le générateur d'ébauche et le gap, on bloque l'effet de multiples capacités parasites, sur l'usinage. Le générateur d'ébauche avec ses câbles coaxiaux est débranché. Seul un deuxième générateur de finition, qui peut être le générateur d'amorçage, est connecté au gap de sorte à minimiser les capacités parasites réparties attachées à l'ensemble des lignes. En intercalant une plaque isolante entre la pièce à usiner et son posage, on crée une capacité qui vient atténuer l'effet d'une capacité parasite du fil électrode ainsi que de tout le système de déroulement et d'évacuation du fil, par rapport à la terre. Seule la capacité qui figure la capacité du gap lui-même, entre fil et pièce ne peut être ni atténuée ni bloquée. La représentation du problème telle que décrite dans EP 1 193 016 A2, ne fait pas apparaître les capacités parasites réparties attachées aux lignes entre le générateur de finition et le gap, ni celles attachées au générateur de finition, supposées ici négligeables.

Malheureusement il s'avère que l'on ne peut pas se permettre d'ignorer ces capacités. La présente invention a pour but de remédier à ces inconvénients et à créer un dispositif d'usinage permettant un usinage de finition ou de superfinition de très faible énergie et de grande qualité et fiabilité. Le dispositif d'usinage est caractérisé à cet effet par le fait qu'il comprend au moins un élément capacitif, agencé à l'intérieur de l'une ou des deux têtes d'usinage, de préférence à proximité ou dans les contacts prévus entre ledit circuit électrique et l'électrode-outil, branché en série entre la source et l'un des pôles du gap d'usinage et dont les caractéristiques sont telles qu'il empêche les composantes continues des impulsions électriques provenant de la source d'être appliquées au gap d'usinage et de laisser passer les composantes à courant variable provenant de la source et qu'il réduit la capacité totale dudit circuit électrique par rapport au gap d'usinage.

Grâce à ces caractéristiques, il est possible de réduire l'énergie des décharges érosives de façon très efficace et simple. On obtient ainsi un usinage de finition et superfinition de très grande qualité. En outre, le prix de revient du dispositif est modéré et sa construction peu compliquée.

Avantageusement, le dispositif d'usinage comprend un premier élément capacitif connecté en série entre un premier pôle de la première source et l'électrode-outil et un second élément capacitif connecté en série entre un second pôle de la première source et l'électrode-pièce.

La réduction énergétique est ainsi particulièrement importante.

Selon un mode d'exécution préféré, l'élément capacitif est agencé le plus près possible d'un des pôles du gap d'usinage, de préférence à proximité ou dans les contacts prévus entre ledit circuit électrique et l'électrode-outil.

Ces caractéristiques permettent encore de réduire davantage l'énergie des décharges érosives de façon à obtenir un excellent usinage de superfinition.

Favorablement, l'électrode-outil est un fil et l'élément capacitif est constitué par un guide-fil dont une partie en contact avec le fil est en matière isolante et dont une autre partie est en matière conductrice.

Un élément capacitif particulièrement efficace et près du fil-électrode peut ainsi être réalisé assurant des décharges érosives d'un niveau énergétique très faible.

De manière avantageuse, la première source comprend un dispositif de mise en court-circuit pour produire des impulsions électriques à pente d'accroissement de tension élevée.

Cette première source peut être agencée de façon à produire des impulsions électriques avec une fréquence comprise entre 0,1 et 10 Mhz, avec une amplitude en tension comprise entre 60 et 300 V et avec une pente d'accroissement positif ou négatif de la tension comprise entre 0,2 et 5V/nS.

Ces caractéristiques assurent un amorçage efficace des décharges érosives, malgré la présence d'au moins un élément capacitif monté en série dans le circuit électrique.

Selon un mode d'exécution préféré, le dispositif de réduction énergétique comprend un élément de self inductance branché galvaniquement aux deux pôles du gap d'usinage.

Grâce à ces caractéristiques, la tension moyenne mesurée aux bornes du gap peut être gardée nulle. On évite ainsi des phénomènes d'électrolyse préjudiciables.

Avantageusement, la valeur de l'inductance dudit élément de self inductance est choisie de façon que la fréquence de résonance du circuit électrique soit petite par rapport à la fréquence des impulsions électriques de la première source.

Selon un mode d'exécution particulièrement favorable, le dispositif de réduction énergétique comprend une source de tension continue réglable branchée en série avec l'élément de self inductance entre les deux pôles du gap d'usinage.

Cette source permet de régler la tension moyenne mesurée aux bornes du gap à une valeur prédéterminée. Des dépositions électrolytiques contrôlées et des colorations de la pièce sciée sont ainsi rendues possible.

En outre, la qualité de l'usinage de superfinition peut encore être améliorée.

D'autres avantages ressortent des caractéristiques exprimées dans les revendications dépendantes et de la description exposant ci-après l'invention plus en détail à l'aide de dessins qui représentent schématiquement et à titre d'exemple des modes d'exécution et des variantes.

La figure 1 représente un schéma électrique d'un premier mode d'exécution.

Les figures 2a à 2f illustrent des simplifications progressives du schéma électrique de la figure 1 combinant progressivement les capacités de ce schéma.

Les figures 2g et 2h sont des schémas électriques partiels de variantes de celui de la figure 1.

Les figures 3a et 3b sont des diagrammes du courant et de la tension en sortie du premier générateur qui est le générateur d'amorçage.

Les figures 4a, 4b et 4c représentent des diagrammes de la tension instantanée, du courant et de la tension moyenne au niveau du gap d'usinage G.

La figure 5 représente le schéma électrique d'un second mode d'exécution perfectionné.

La figure 6 illustre un schéma électrique partiel d'une variante de ce second mode d'exécution.

Les figures 7a et 7b illustrent des diagrammes de la tension instantanée et moyenne aux bornes du gap d'usinage pour le second mode d'exécution.

Les figures 8a, 8b et 8c montrent d'autres diagrammes de la tension instantanée, du courant et de la tension moyenne aux bornes du gap pour le second mode d'exécution.

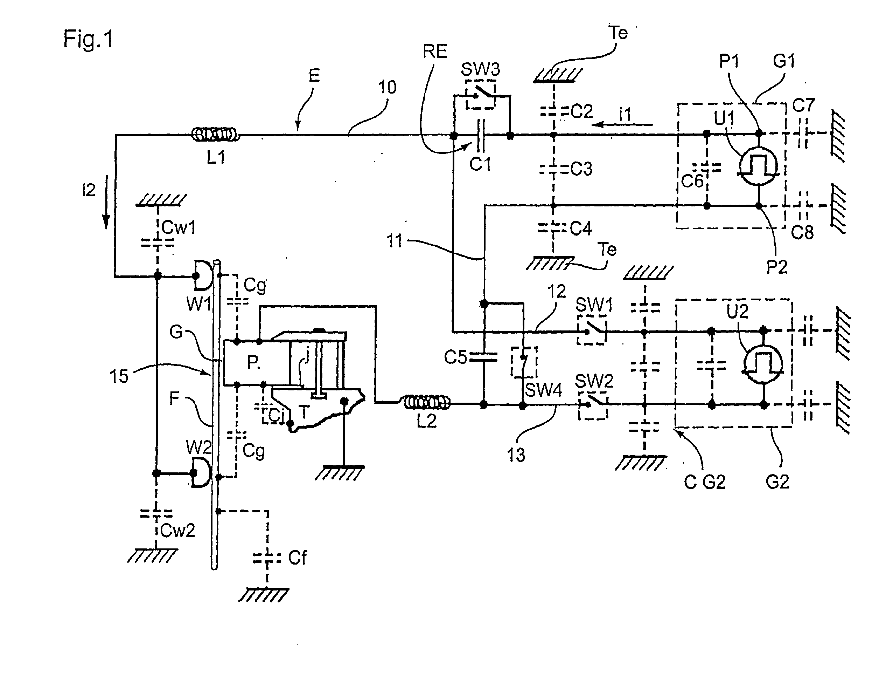

Le premier mode d'exécution du dispositif d'usinage illustré à la figure 1 comprend une première source de tension/courant U1 intégrée dans un premier générateur d'usinage G1 reliée par un circuit électrique E à une électrode-outil F au moyen d'une première ligne 10 et à une électrode-pièce P au moyen d'une seconde ligne 11.

Une seconde source U2 intégrée dans un second générateur d'usinage G2 est reliée au moyen d'une troisième ligne 12 à l'électrode-outil F et au moyen d'une quatrième ligne 13 à l'électrode-pièce P.

Le premier générateur G1 est destiné à provoquer l'amorçage des décharges entre l'électrode-outil F et l'électrode-pièce P et fournit des énergies plus faibles que le second générateur G2 qui fournit l'énergie des décharges les plus érosives et entretient ces dernières.

Deux interrupteurs SW1 et SW2 disposés sur les lignes 12 et 13 permettent de débrancher le second générateur G2 de l'électrode-outil F et de l'électrode-pièce P lorsqu'on désire effectuer un usinage de finition ou de superfinition.

L'électrode-outil est ici un fil F déroulé d'une bobine débitrice non illustrée et récupérée dans un dispositif de récupération non illustré, mais connu en soi. Dans une zone d'usinage 15, il existe ainsi un intervalle ou gap d'usinage G entre l'électrode-fil et l'électrode-pièce, à travers lequel les décharges érosives sont amorcées. Le fil F est en contact galvanique avec les lignes 10 et 11 grâce à un premier et un second contact W1 et W2.

Les éléments L1 et L2 représentent les self inductances des deux lignes 10 et 11.

L'électrode-pièce P est fixée sur un posage T par l'intermédiaire d'un élément isolant J, par exemple une plaque de support en matière plastique. Le fil F et le posage T peuvent être déplacés l'un par rapport à l'autre pour découper la pièce P par électroérosion selon une configuration géométrique donnée.

Conformément à l'invention le dispositif d'usinage comprend un dispositif de réduction énergétique RE destiné à réduire l'énergie des décharges érosives pour un usinage fin.

Ce dispositif RE comprend au moins un élément capacitif C1 branché entre le premier générateur G1 et le gap d'usinage G et dont les caractéristiques sont telles qu'il empêche les composantes continues des impulsions électriques provenant du premier générateur G1 d'être appliquées au gap d'usinage G et de laisser passer à travers le gap d'usinage les composantes à courant variable provenant du premier générateur G1. Ainsi la capacité totale du circuit électrique E par rapport au gap G est fortement réduite.

Cet élément capacitif est dans le premier mode d'exécution constitué par un condensateur C1 de valeur pouvant aller jusqu'à 0,1 $\mu$F mais typiquement comprise entre 0,1 nF et 1 nF, agencé sur la première ligne 10. Un interrupteur SW3 permet de court-circuiter le condensateur C1 lorsqu'on désire augmenter l'énergie des décharges érosives.

Un autre élément capacitif, sous forme d'un second condensateur C5 de faible valeur peut être agencé sur la seconde ligne 12 pour réduire encore davantage l'énergie des décharges érosives. Ce second condensateur C5 peut être court-circuité grâce à un interrupteur SW4. Sa valeur est favorablement comprise entre 0,1 nF et 1 nF.

Le dispositif d'usinage présente ainsi les capacités parasites suivantes :

- Les capacités parasites liées au second générateur d'ébauche G2 et aux lignes 12 et 13 indiquées dans leur totalité par C G2, ces capacités C G2 étant déconnectées du gap lors de l'ouverture des deux interrupteurs SW1 et SW2;
- C2 étant la capacité parasite de la première ligne 10 par rapport à la terre Te;
- C3 étant la capacité parasite entre les lignes 10 et 11;
- C4 étant la capacité parasite de la seconde ligne 11 par rapport à la terre Te;
- C6 étant la capacité parasite interne du premier générateur G1;
- C7 étant la capacité parasite d'un premier pôle P1 de la première source U1 par rapport à la terre Te;
- C8 étant la capacité parasite d'un second pôle P2 de la première source U1 par rapport à la terre Te;
- CW1 étant la capacité parasite à proximité du premier contact W1 par rapport à la terre;
- CW2 étant la capacité parasite à proximité du second contact W2 par rapport à la terre;
- Cj étant la capacité entre l'électrode-pièce P et le posage T;
- Cf étant la capacité parasite entre le fil et la terre; et
- Cg étant la capacité du gap G entre l'électrode-outil F et l'électrode-pièce P.

A la figure 1, le condensateur C1 de faible valeur branché en série dans une des deux lignes du générateur G1 est un moyen simple d'atténuer l'effet des capacités parasites C3 et C6 sur l'usinage. La charge accumulée dans C3 participe à l'usinage en suivant le chemin C3, C1, L1, W1 et W2, F, P, L2, SW4, C3. La capacité équivalente est $C1*C3 / (C1 + C3) < C1.$ Le même raisonnement est applicable à la capacité parasite C6.

Les charges des capacités parasites CW1 + CW2 + Cf + C2 + C7 pourraient s'additionner et participer à la décharge érosive, mais sont atténuées par la capacité Cj. Il faut noter ici que Cj et la plaque isolante J constituent le dispositif le plus simple permettant de limiter l'effet de Cf en particulier, soit la capacité parasite attachée au fil, à l'ensemble de son système de déroulement et de récupération. Dans le cas de certaines machines où le fil usé est stocké directement dans le bac d'usinage, Cf peut atteindre des valeurs importantes.

Si l'interrupteur SW4 est passant, alors les capacités parasites C8 + C4 + Cj additionnent leurs charges qui peuvent traverser le gap en trouvant un chemin vers la terre Te via la capacité équivalente à CW1 + CW2 + Cf + C2 + C7. Le condensateur C5 de faible valeur branché en série dans l'autre ligne 11 du générateur G1 est prévu pour atténuer cette dernière énergie de décharge et sera détaillé ci-dessous. La figure 1 représente le condensateur C5 court-circuité par le commutateur SW4, donc inactif dans cet exemple.

L'effet des capacités Cg réparties dans le gap d'usinage ne peut être atténué en plaçant un quelconque condensateur dans le circuit de décharge car leurs charges traversent le gap par le plus court chemin possible. Les seuls moyens connus permettant d'influencer la valeur de ces capacités réparties serait d'utiliser un autre liquide diélectrique, par exemple de l'huile à la place de l'eau, ou encore de modifier la géométrie de l'entrefer ou du gap.

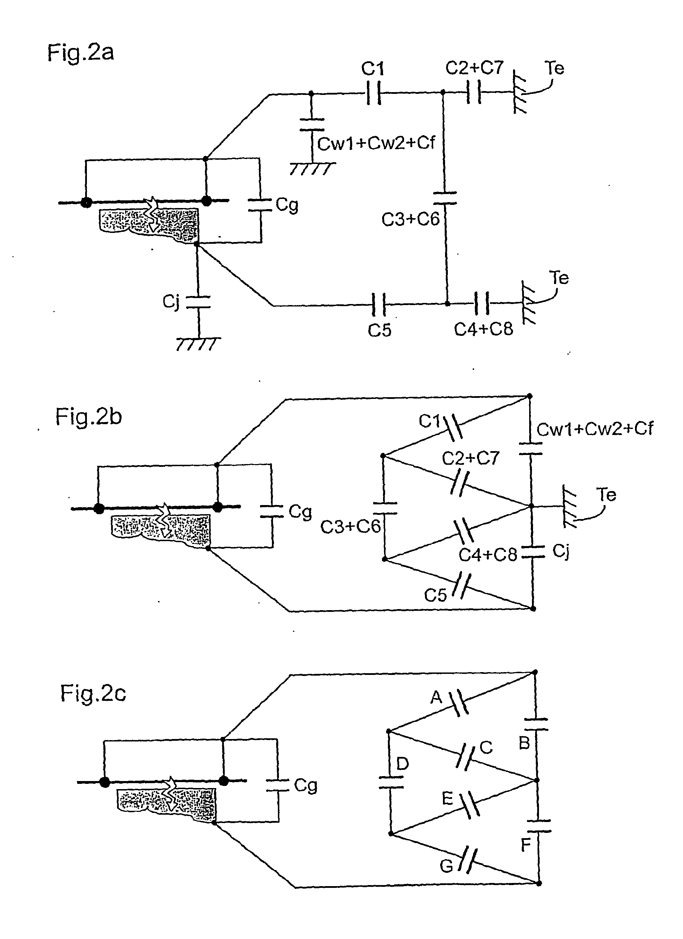

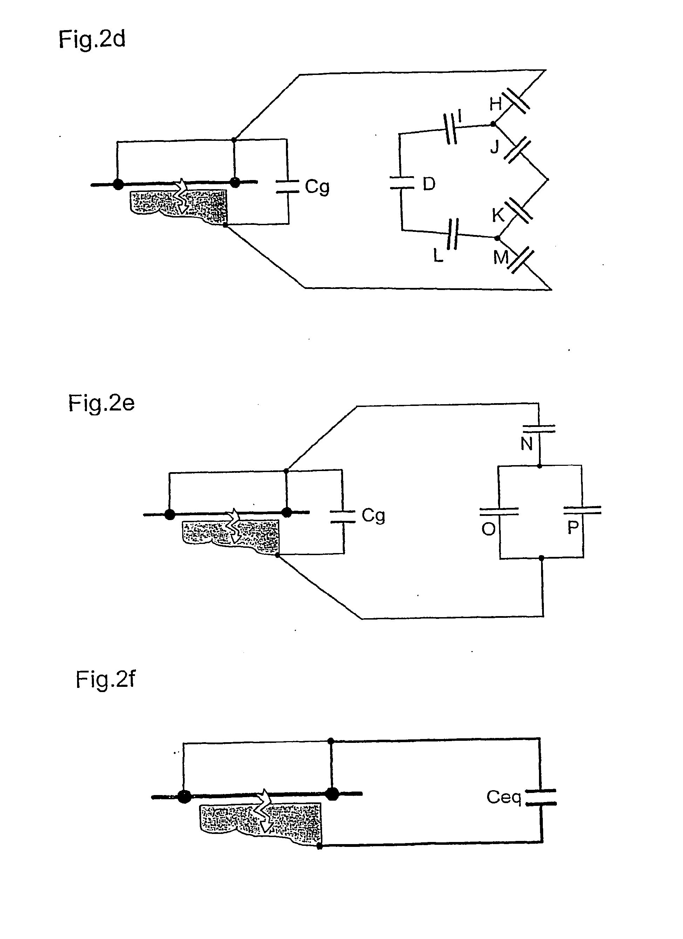

Les figures 2a, 2b, 2c, 2d, 2e et 2f vont permettre de distinguer comment chacune des capacités de la figure 1 se combinent aux autres vis-à-vis du gap d'usinage G.

La figure 2a est une première simplification de la figure 1, dans laquelle ne sont représentés que le gap d'usinage, les différents groupes de capacités susceptibles de participer à l'usinage et leurs connexions à la terre.

La figure 2b ramène les liaisons à la terre sur un point unique Te et permet de voir le rôle respectif des capacités Cj, C1 et C5 utilisées pour atténuer l'énergie de l'ensemble des capacités parasites réparties.

La figure 2c illustre un simple changement de variable.

$$A = C1$$

$$B = CW1 + CW2 + Cf$$

$$C = C2 + C7$$

$$D = C3 + C6$$

$$E = C4 + C8$$

$$F = Cj$$

$$G = C5$$

La figure 2d illustre le passage de la configuration des capacités en triangle vers la configuration des capacités en étoile pour le groupe des capacités ABC et le groupe des capacités EFG, avec les égalités suivantes :

$$H = (A*B+A*C+B*C) / C$$

$$I = (A*B+A*C+B*C) / B$$

$$J = (A*B+A*C+B*C) / A$$

$$K = (E*F+E*G+F*G) / G$$

$$L = (E*F+E*G+F*G) / F$$

$$M = (E*F+E*G+F*G) / E$$

Selon la figure 2e il apparaît que

$$1 / N = (1 / H) + (1 / M)$$

$$1 / O = (1 / I) + (1 / D) + (1 / L)$$

$$1 / P = (1 / J) + (1 / K)$$

Et selon la figure 2f , la capacité équivalente globale Ceq de tous les dispositifs d'usinage se détermine par l'équation

$$Ceq = Cg + (N + O + P) / (O*N + P*N)$$

Les condensateurs C1 et C5 viennent compléter l'atténuation produite par la capacité Cj. Pour apprécier le rôle respectif de C1, C5 et Cj, nous allons ci-après considérer les valeurs numériques usuelles des différentes capacités parasites qui doivent entrer en ligne de compte. Les self inductances de L1 et L2 des lignes 10, 11 d'environ 500 nH ne sont pas considérées lors de cette évaluation, laquelle utilise les valeurs numériques suivantes :

C1 ou C5 : 0.5 nF

Cj : 0.1 à 10 nF selon les dimensions de la pièce à usiner

C2 +C7 : 5 nF

C4 + C8 : 5nF

C3 + C6 : 100 nF

CW1 + CW2 + Cf : de 1 à 5 nF

Cg : 0.5 nF

| Variante d'utilisation du circuit : | C1 | C5 | Cj | Ceq (Fig. 2f) |
|---|---|---|---|---|
| 1. | 0.5 nF | 0.5 nF | 10 nF | 4.10 nF |
| 2. | 0.5 nF | court-circuit | 10 nF | 4.98 nF |
| 3. | 0.5 nF | 0.5 nF | court-circuit | 5.97 nF |
| 4. | 0.5 nF | court-circuit | court-circuit | 6.00 nF |
| 5. | court-circuit | 0.5 nF | 10 nF | 6.94 nF |
| 6. | court-circuit | 0.5 nF | court-circuit | 15.71 nF |
| 7. | court-circuit | court-circuit | 10 nF | 106.5 nF |
| 8. | court-circuit | court-circuit | court-circuit | 110.5 nF |

Les calculs ont été effectués pour les valeurs Cj = 10 nF et CW1+CW2+Cf = 5 nF.

D'après la ligne 7 du tableau ci-dessus comparée à la ligne 8, on voit que l'introduction seulement d'une plaque isolante J entre la pièce P et son posage T n'apporte pas une amélioration substantielle, en comparaison de la ligne 4, où l'effet étonnant du condensateur C1 seul apparaît ; la capacité équivalente appliquée au gap d'usinage se trouve divisée par 18, voir les lignes 4 et 8.

La ligne 6 montre que le condensateur C5 seul est moins efficace que le condensateur C1 seul (ligne 4), la capacité équivalente se trouve ici divisée par 7.

L'effet du condensateur C1 est d'autant plus déterminant que les capacités parasites C3 + C6 ont une valeur élevée, voir ci-dessous huit autres variantes d'utilisation du circuit avec C3 + C6 = 20 nF au lieu de 100 nF dans le tableau précédent.

| Variante | C1 | C5 | Cj | Ceq (Fig. 2f) |
|---|---|---|---|---|
| 1a | 0.5 nF | 0.5 nF | 10 nF | 4.10 nF |
| 2a | 0.5 nF | court-circuit | 10 nF | 4.91 nF |
| 3a | 0.5 nF | 0.5 nF | court-circuit | 5.97 nF |

(suite)

| Variante | C1 | C5 | Cj | Ceq (Fig. 2f) |
|---|---|---|---|---|
| 4a | 0.5 nF | court-circuit | court-circuit | 6.00 nF |
| 5a | court-circuit | 0.5 nF | 10 nF | 6.74 nF |
| 6a | court-circuit | 0.5 nF | court-circuit | 14.81 nF |
| 7a | court-circuit | court-circuit | 10 nF | 26.5 nF |
| 8a | court-circuit | court-circuit | court-circuit | 30.5 nF |

La comparaison des lignes 4a et 7a confirme cependant la meilleure efficacité du condensateur C1 seul par rapport à celle de la capacité Cj seule, d'autant qu'il sera difficile dans certains cas d'abaisser la valeur de la capacité Cj en raison des dimensions de la pièce à usiner. On peut bien entendu prolonger autant que l'on veut les calculs comparatifs en appliquant la méthode détaillée ci-dessus.

En présence d'une très forte capacité parasite du fil électrode Cf (par exemple plus de 20 nf) on retrouvera un intérêt à introduire la capacité Cj associée au condensateur C1 et non pas ce dernier seul.

Pour la clarté de la figure 1, les condensateurs C1 et C5, ainsi que les commutateurs associés SW3, SW4, ont été représentés au centre de cette figure 1 et sur chacune des deux lignes reliant le premier générateur au gap d'usinage G. Après la démonstration ci-dessus il apparaîtra clairement que ces deux condensateurs C1 et C5 gagneront en efficacité si on peut les installer aussi près que possible de la zone d'usinage 15, c'est-à-dire le condensateur C1 le plus près possible des contacts d'usinage W1, W2, et le condensateur C5 le plus près possible de la pièce à usiner P.

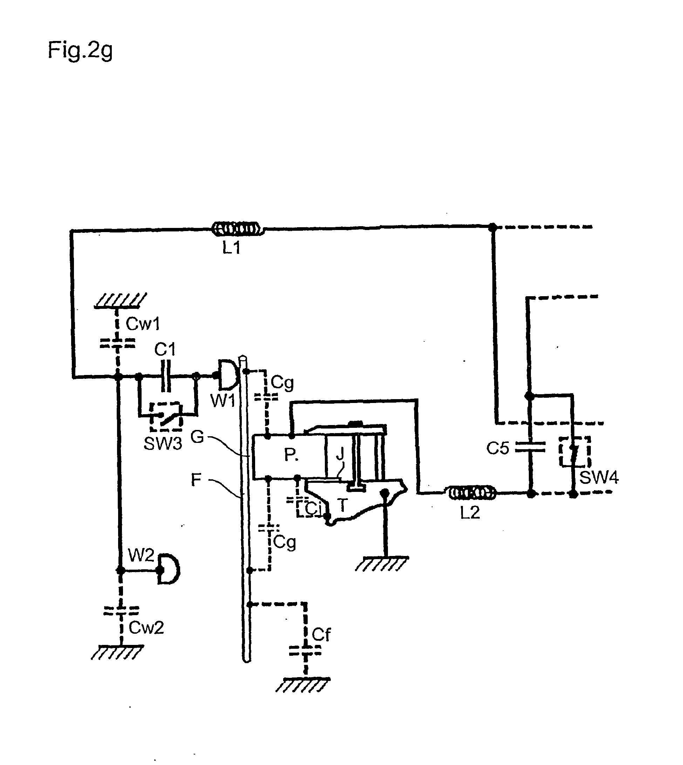

On peut par exemple installer le condensateur C1 entre CW1 et W1 à l'intérieur de la tête d'usinage supérieure (figure 2g), le contact d'usinage W2 à l'intérieur de la tête d'usinage inférieure étant en position rétractée ne fait plus contact avec le fil. De cette façon, l'énergie contenue dans les capacités parasites CW1 et CW2 s'en trouvera également atténuée.

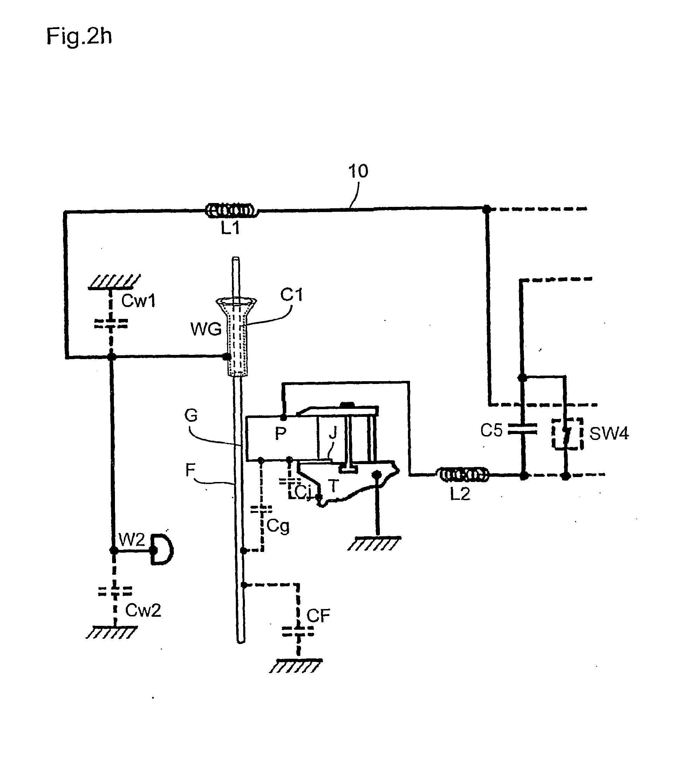

Si l'on pousse le principe exposé ci-dessus jusqu'à sa limite, l'efficacité maximum du condensateur C1 est obtenue en remplaçant le contact W1 par un manchon cylindrique en matière isolante qui fera office de capacité branchée en série dans une ligne menant du premier générateur G1 au gap G. Dans le manchon cylindrique le fil-électrode F se trouve guidé. La figure 2h représente le fil-électrode F guidé à l'intérieur d'un cylindre en céramique isolante WG surmonté d'un cône pour faciliter l'entrée du fil. L'extérieur dudit cylindre est recouvert d'une surface conductrice, par exemple en cuivre, reliée galvaniquement à l'un des pôles du générateur G1. Le contact d'usinage inférieur W2 en position rétractée ne fait pas contact avec le fil. Dans ce dernier mode d'exécution, la capacité C1 de forme cylindrique est située autour du fil-électrode F.

Les fabricants de composants électroniques utilisent couramment des céramiques industrielles dont la rigidité diélectrique est de 20 KV / mm à 25 °C et à une fréquence de 1 Mhz. La constante diélectrique εr de ces céramiques peut aller habituellement de 20 à 100. Pour des applications spéciales on trouve des εr supérieurs à 100 et jusqu'à 12'000 avec par exemple des céramiques à base de titanates de strontium, baryum, etc, qui ont des valeurs de rigidité de 50 à 300 V / mm.

Pour un fil-électrode de diamètre 0,250 mm, on peut par exemple concevoir un guide cylindrique isolant de diamètre intérieur 0,260 mm avec une céramique de constante diélectrique εr = 100. Avec une épaisseur de céramique de 0,1 mm, un tel guide cylindrique d'environ 50 mm de long donnerait une capacité de 0,5 nF et supporterait une surtension de 2 KV.

Dans ce type d'élément capacitif, ce dernier est agencé le plus près possible d'un des pôles du gap d'usinage G, de préférence à proximité ou dans les contacts W1 ou W2 prévus entre le circuit électrique E et l'électrode-outil. Cet élément capacitif peut être constitué par un guide-fil WG dont une partie en contact avec le fil F est en matière isolante et dont une autre partie reliée au circuit électrique est en matière conductrice.

En résumé, l'introduction de capacité C1 et (ou) C5 en série dans les lignes 10, 11 de décharge du générateur G1 et ceci le plus proche possible du gap d'usinage G, permet donc de réduire l'énergie des décharges en superfinition en comparaison d'une solution où l'on introduirait uniquement une plaque isolante entre la pièce et son posage et où l'on déconnecterait les lignes d'amenée de courant du générateur d'ébauche G2, comme décrit dans EP 1 193 016 A2.

Toutefois, ce faisant il devient nécessaire de tenir compte du fait que la présence des capacités C1 ou C5 de faible valeur en série dans le circuit électrique entraîne la disparition au niveau du gap de la composante continue de tension fournie par le générateur d'amorçage G1. Il s'ensuit que la probabilité d'amorcer se trouve considérablement réduite, d'où une baisse du rendement d'usinage en finition.

L'invention propose pour corriger cette particularité de modifier le fonctionnement du générateur d'amorçage G1. Traditionnellement, le générateur d'amorçage applique une tension suffisamment élevée durant un temps relativement long jusqu'à ce que l'amorçage se produise. Cependant, l'expérience a montré qu'en électroérosion, l'amorçage peut aussi être provoqué par un accroissement très rapide du champ électrique aux bornes du gap d'usinage. Dans le présent cas d'usinage, des accroissements positifs ou négatifs de tension appliqués aux bornes du gap de quelques V / nS, c'est-à-dire de 0,1 à 5 V / nS environ, donnent une bonne probabilité de déclencher une décharge érosive compte tenu du caractère stochastique du phénomène d'amorçage.

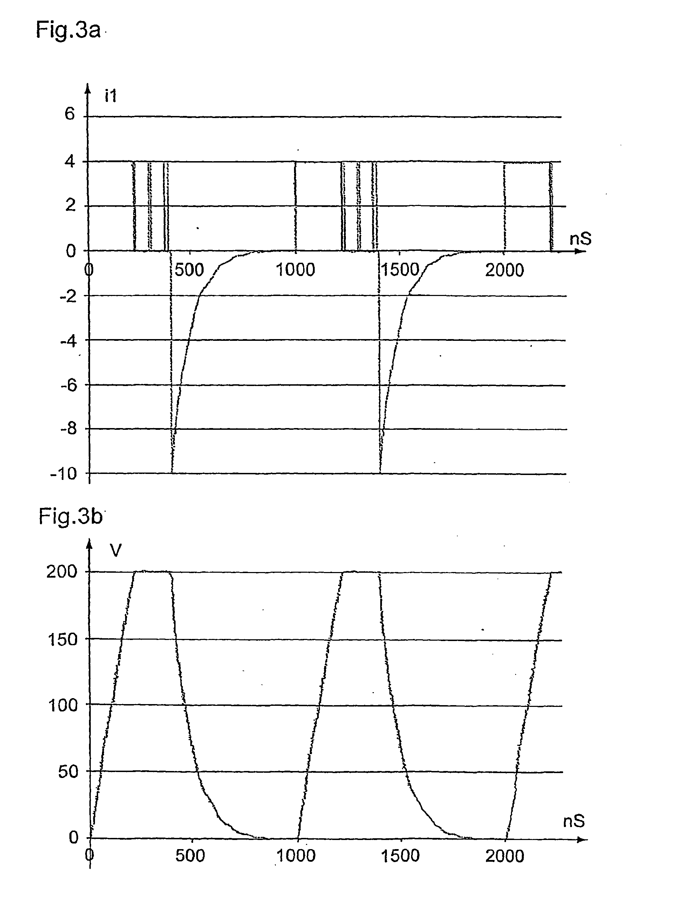

Pour mettre à profit selon la présente invention ledit phénomène d'amorçage déclenché par des accroissements rapides de tension, le générateur G1 devra produire des impulsions de tension/courant brutales en choisissant de préférence une fréquence de répétition dans la plage de 0,1 à 10 Mhz. La valeur de 1 Mhz a été prise à titre d'exemple dans le cas illustré par les figures 3a et 3b.

La figure 3a est un diagramme du courant i1 en sortie du générateur G1 en fonction du temps (nS). La figure 3b est un diagramme de la tension V en sortie du générateur G1 et appliquée sur les capacités parasites réparties de la ligne, symbolisées par C2, C3, C4 (figure 1) ci-après les capacités de ligne.

Le générateur G1 est capable de fournir des signaux d'amplitude de 60 à 300 V, par exemple 200 V dans l'exemple illustré ici.

Comme on peut le voir sur les figures 3a et 3b, au début du signal la tension est nulle aux bornes des capacités de ligne. Le signal débute par un escalier de courant de 4A qui commence à charger ces capacités de ligne. Tant que la tension en sortie du générateur G1 est inférieure à 200V, le courant est maintenu à 4 A. Quand la tension en sortie devient supérieure à 200 V, le courant cesse, pour être enclenché à nouveau de façon à maintenir une tension de 200 V. Après une première durée prédéterminée à compter du début, ici après 400 nS les capacités de ligne sont mises en court-circuit à travers une résistance ohmique de 20 Ohms dans cet exemple, d'où l'apparition d'une pointe de courant négative de 10 A qui va brutalement décharger les capacités de ligne. Le dispositif de mise en court-circuit non représenté à la figure 1 est constitué dans le mode d'exécution décrit par un pont de 4 transistors Mos-Fet IRFP 22N 50A du fabricant " International Rectifier ".

Les capacités de ligne se déchargent ainsi rapidement et un courant de +4A est à nouveau délivré au début du signal suivant, après une seconde période prédéterminée qui est ici de 1000 nS.

Les caractéristiques courant/tension décrites ici, ne sont données qu'à titre d'exemple. Il est bien entendu que l'on peut concevoir d'autres dispositifs permettant de générer aux bornes du gap d'usinage des accroissements rapides de tension.

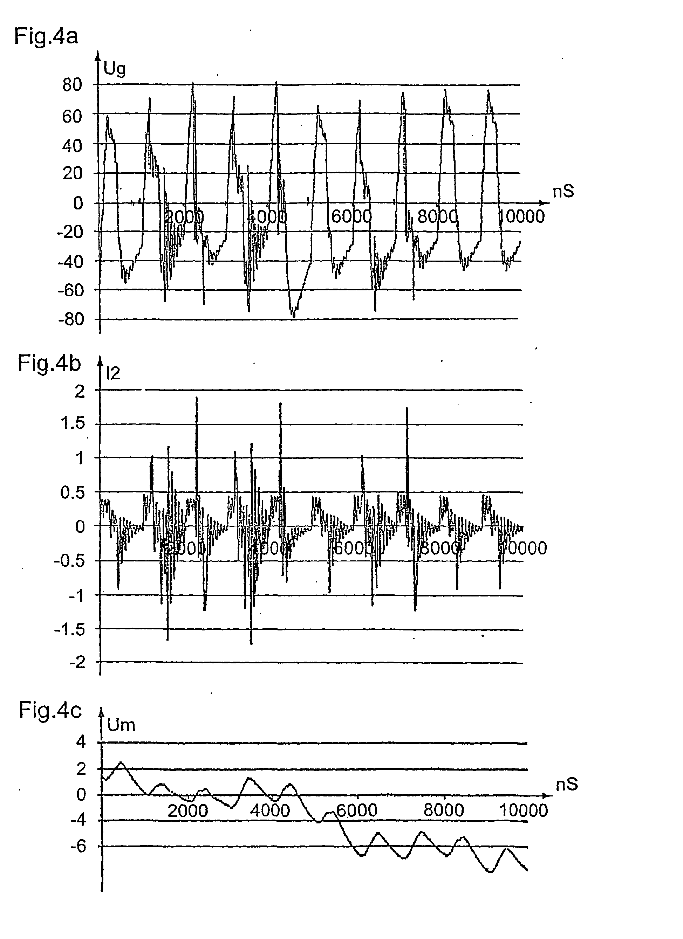

Ce mode d'excitation, comme le montre les figures 4a, 4b, 4c, produit dans le gap G des décharges brèves non calibrées d'environ 100 nS, provoquées par les transitoires rapides du signal de courant/tension délivrés par le générateur G1. La figure 4a représente la tension instantanée Ug (Volts) aux bornes du gap en fonction du temps (nS). La figure 4b est le courant i2 à travers le gap d'usinage G. Les amorçages coïncident ici avec les pics de courant i2 supérieurs à 1 A et inférieurs à -1 A environ.

Un condensateur C1 ayant été placé en série dans le circuit de décharge, il en découle que la moyenne du courant i2 (figure 4b) délivré au gap est nulle. Par suite, si le gap pouvait être réduit à une simple impédance ohmique la tension moyenne à ses bornes serait être nulle également. Ce n'est pas le cas comme le montre la figure 4c correspondante étalonnée en Volts, la mesure ayant été effectuée avec un filtre RC de 10 $\mu$S. Sur la figure 4c on distingue que la tension moyenne Um fluctue par exemple, de +2 V à -6 V dans ce cas particulier en raison de l'irrégularité des amorçages.

L'amorçage étant aléatoire, comme on le voit, la tension moyenne peut varier dans une plage de + ou - 8 Volts environ, par exemple ici dans un intervalle de moins de 10 périodes. Il s'agit bien là d'une autre particularité liée à la présence d'un condensateur en série dans le circuit de décharge du générateur G1. Cela signifie qu'il n'est plus possible d'imposer une tension moyenne nulle aux bornes du gap comme cela peut se pratiquer aujourd'hui couramment sur les machines d'électroérosion par fil.

Les fluctuations de la tension moyenne Um peuvent engendrer des phénomènes d'électrolyse bien connus des hommes du métier. L'intégrité cristalline de certains métaux ou alliages de la pièce à usiner peut être altérée lorsque la tension moyenne n'est pas maintenue proche de zéro volt aux bornes du gap. C'est particulièrement le cas avec des variétés de carbure de tungstène qui peuvent s'effriter sous l'effet des courants d'électrolyse.

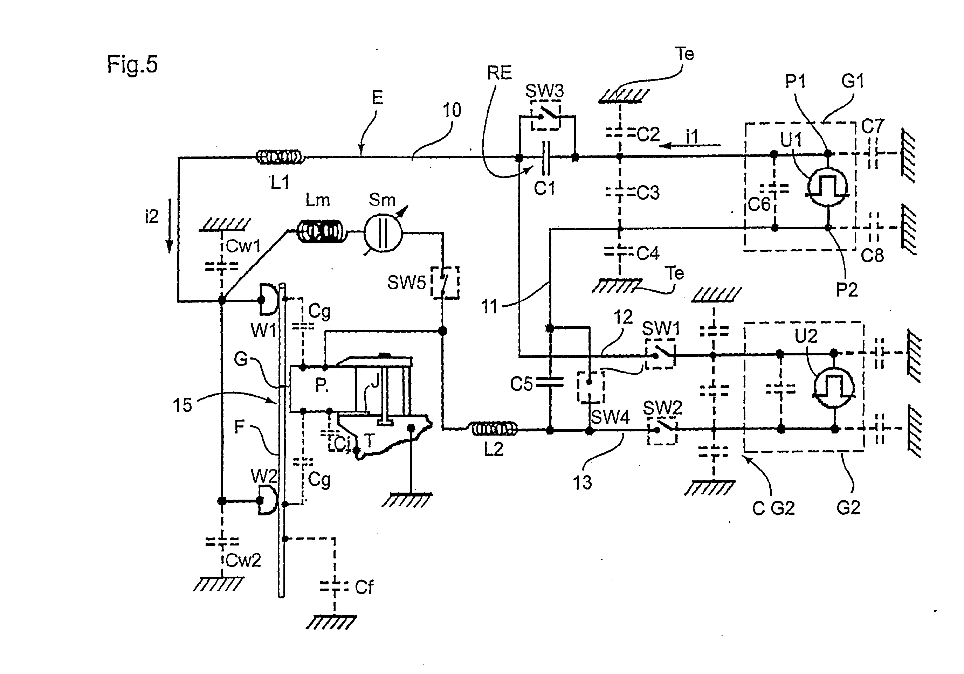

La présente invention propose un moyen d'éliminer l'inconvénient décrit ci-dessus en référence au mode d'exécution illustré à la figure 5. La solution consiste à brancher aux bornes du gap un élément de self induction Lm, par exemple sous forme d'une bobine d'inductance de forte valeur, en série avec une source de tension continue réglable Sm .

Le mode d'exécution de la figure 5 est dans les autres caractéristiques identique à celui de la figure 1. Les mêmes composants et éléments sont donc désignés par les mêmes chiffres de référence.

Les éléments nouveaux sont la bobine d'inductance Lm en série avec la source de tension continue réglable Sm branchée aux bornes du gap, à savoir aux contacts d'usinage W1, W2 et à la pièce P, ainsi qu'un interrupteur SW5 permettant de débrancher la bobine d'inductance Lm et la source de tension Sm du gap de façon que la tension moyenne Um aux bornes du gap fluctue librement.

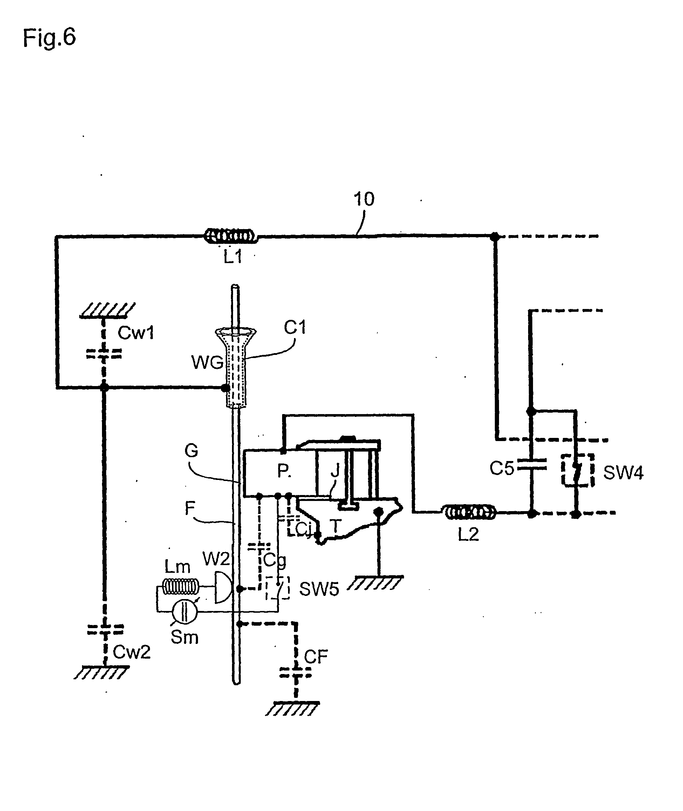

Le posage T est relié à la terre alors que la pièce P se trouve à un potentiel flottant en raison de la plaque isolante J, laquelle engendre une capacité Cj entre la pièce et le posage. Ce détail est sans importance en regard de l'invention. Que la pièce P soit ou non reliée à la terre, c'est à dire que la plaque isolante J soit présente ou non, la bobine d'inductance Lm en série avec la source de tension Sm doivent être galvaniquement reliées d'une part à la pièce P et d'autre part à l'électrode-outil ou aux contacts d'usinage W1, W2 pour imposer une tension moyenne Um constante aux bornes du gap. La même remarque s'applique également au dispositif illustré à la figure 2h où la capacité C1 se trouve autour du fil sous la forme d'un guide en matière isolante. Si la bobine d'inductance Lm en série avec la source de tension Sm, devaient être branchées dans ce dernier cas de figure, alors le contact W2 représenté en position rétractée sur la figure 2h devrait à nouveau contacter le fil-électrode F, mais ce contact W2 ne devrait alors pas être relié à la ligne 10, mais à la pièce P par l'intermédiaire des éléments Lm, Sm et SW5, comme cela est illustré à la figure 6.

L'élément de self inductance Lm doit être d'une valeur suffisamment grande pour que la fréquence de résonance du circuit électrique :

$$Fo = 1 / 2\pi^*(Lm * Ceq)^{1/2}$$

soit petite par rapport à la fréquence d'excitation des impulsions électriques du générateur d'amorçage G1, typiquement 100 fois plus petite.

La valeur de cet élément de self inductance Lm est choisie de façon que le rapport entre la fréquence d'excitation du générateur G1 et la fréquence du circuit électrique soit comprise entre 10 et 500, de préférence entre 50 et 150.

Par exemple avec une fréquence d'excitation de 1 Mhz du générateur G1 comme choisie ci-dessus et Ceq = 5 nF, la fréquence de résonance serait obtenue avec une inductance de 5 $\mu$H. Il est donc conseillé dans ce cas, d'utiliser une self inductance de valeur 500 $\mu$H minimale et jusqu'à 10 mH.

La valeur relativement élevée de la bobine inductance Lm fait que la tension moyenne aux bornes du gap ne peut pas varier trop rapidement. Si la bobine d'inductance Lm comporte une impédance ohmique faible par rapport à celle du gap, avec Lm = 5 mH et Ceq = 5 nF par exemple, la tension de la source continue réglable Sm imposera sa tension aux bornes du gap après un délai d'environ 30 ils dès l'enclenchement de ladite bobine Lm sur le gap G. Ensuite si les conditions d'usinage changent brusquement, par exemple suite à des variations de la fréquence d'amorçage ou de la résistance du gap, la tension moyenne accusera une fluctuation brève, c'est à dire d'une durée inférieure à 30 $\mu$S, pour retrouver la valeur de la tension Um (Volt) de la source de tension continue réglable Sm.

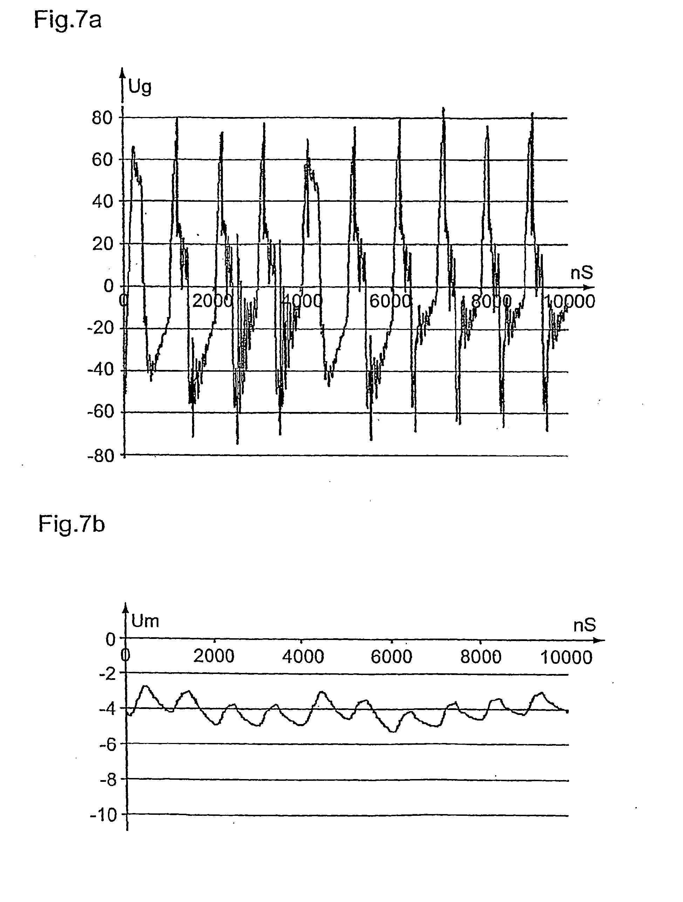

Les figures 7a et 7b montrent la tension instantanée Ug et moyenne Um avec Sm réglée à -4 V. Une tension moyenne proche de -4 V est maintenue aux bornes du gap d'usinage malgré des amorçages sporadiques.

Il est important de noter que la bobine d'inductance Lm aux bornes du gap n'altère pas les transitoires rapides de tension qui permettent l'amorçage des décharges érosives. Avec ce dispositif, on peut envisager des traitements de surfaces selon les matériaux des électrodes en présence en appliquant des tensions moyennes aux bornes du gap G de quelques Volts, positifs ou négatifs. La surface de la pièce P pourra ainsi être revêtue d'une mince couche métallique par électrolyse et pourra être traitée par coloration.

La solution ci-dessus est particulièrement simple. Imaginons par exemple de remplacer la bobine d'inductance Lm par une résistance de forte valeur de l'ordre de 10 Kohm. Avec la résistance du gap de 0,5 à 2 Kohm, on crée un diviseur résistif qui transmet une fraction de la tension Um aux bornes du gap. L'inconvénient d'un tel dispositif est que l'on devrait y installer une boucle de régulation : c'est-à-dire mesurer en continu la tension aux bornes du gap et piloter la tension de sortie de la source Sm en fonction des fluctuations inopinées de l'usinage. Par opposition, la bobine d'induction Lm ne nécessite aucune boucle de régulation.

Pour déconnecter ce dispositif de régulation de la tension moyenne Um on ouvre le commutateur SW5. Cela permet de revenir à un fonctionnement où la tension moyenne aux bornes'du gap peut être laissée libre de fluctuer.

Enfin, ne pas maîtriser la tension moyenne aux bornes du gap entraîne l'impossibilité de prévoir dans quelle polarité vont éclater les décharges ; positive ou négative. Or, il est encore possible à énergie constante, d'améliorer l'état de surface si l'on favorise l'amorçage en polarité positive ou tout du moins si l'on peut réduire l'énergie des décharges qui s'amorcent en polarité négative.

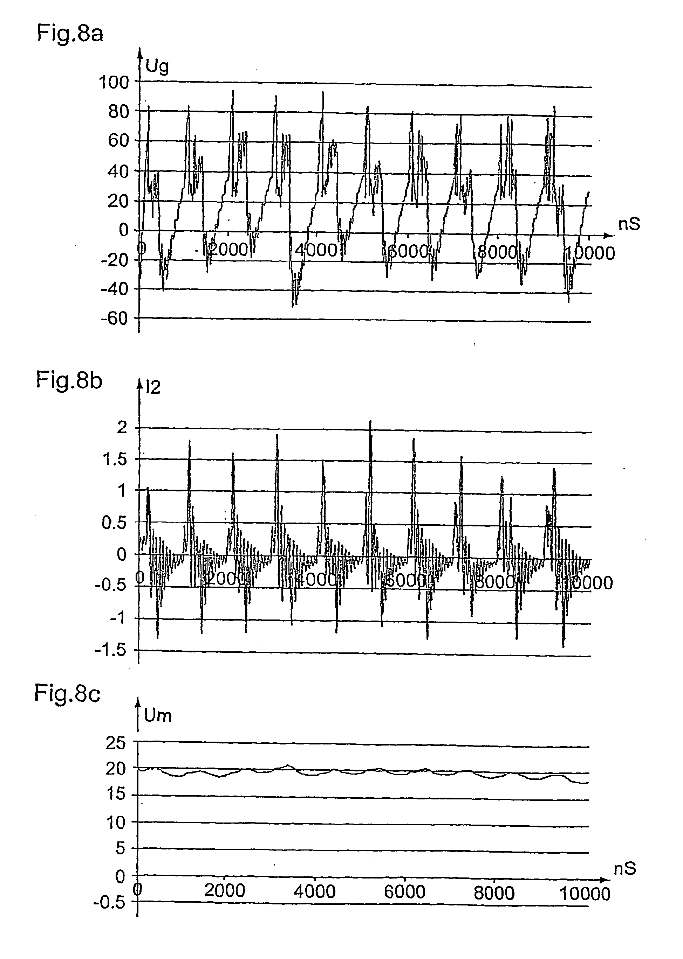

La source de tension réglable Sm associée à l'élément de self induction Lm permettent également selon les applications, en particulier quand on ne redoute pas les phénomènes d'électrolyse, d'accroître fortement la probabilité d'amorcer soit en positif soit en négatif, comme le montrent les figures 8a, 8b et 8c. Dans cet exemple particulier on a choisi de polariser le gap G en positif en réglant la source Sm à une tension continue Um de + 20 Volts (figure 8c). Sur le diagramme du courant i2 (figure 8b) qui traverse le gap, on reconnaît la prépondérance des amorçages positifs aux pointes de courant supérieures à +1A environ, lesquelles correspondent aux amorçages visibles sur la figure 8a.

Lorsqu'on déclenche la source de tension continue Sm ou que l'on règle cette dernière à zéro, la tension moyenne Um aux bornes du gap P est égale à zéro.

Selon une variante simplifiée de mode d'exécution illustrée aux figures 5 et 6, la source de tension continue Sm pourra être supprimée. La tension moyenne Um aux bornes du gap G restera alors constante et zéro du fait de la présence de la bobine d'inductance Lm, mais cette tension ne pourra plus être réglée pour obtenir des traitements de surface, des colorations ou pour améliorer l'état de surface, comme cela est possible grâce à la source Sm.

Il est bien entendu que les modes de réalisation décrits ci-dessus ne présentent aucun caractère limitatif et qu'ils peuvent recevoir toutes modifications désirables à l'intérieur du cadre tel que défini par la revendication 1. En particulier le dispositif de réduction énergétique RE pourra comprendre uniquement l'élément capacitif C1 disposé sur la connexion électrique menant du premier pôle P1 du premier générateur G1 à l'électrode-outil F formant un premier pôle du gap d'usinage G.

Le dispositif de réduction énergétique RE pourra alternativement uniquement comprendre l'élément capacitif C5 disposé sur la connexion électrique menant du second pôle P2 du premier générateur G1 à l'électrode-pièce P formant le second pôle du gap d'usinage G.

Le dispositif de réduction énergétique RE pourra également être muni des deux éléments capacitifs C1 et C5 sur les lignes 10 et 11.

Ces éléments capacitifs C1 et C5 pourraient être de toute nature, des condensateurs, des armatures capacitives intégrées dans les contacts W1 et/ou W2, des guide-fils formant des éléments capacitifs, par exemple sous forme d'un conducteur métallique revêtu d'une matière isolante, par exemple de la céramique, ou des guide-fils de formes particulières, en entonnoirs, tels que représentés à la figure 6.

Le dispositif de réduction énergétique RE pourra être complété facultativement par un élément de self inductance, tel que la bobine d'inductance Lm, reliée galvaniquement aux deux pôles du gap, à savoir à l'électrode-outil et à l'électrode-pièce, pour éviter des fluctuations et des dérives de la tension moyenne Um aux bornes du gap.

En outre, une source de tension continue réglable Sm pourra être branchée facultativement en série avec la bobine d'inductance Lm entre les pôles du gap.

La première source de tension/courant U1 pourra être de toute nature, mais devra permettre des pentes d'accroissement du courant dI/dt de valeur élevée comprise favorablement entre 0,1 et 5 V/nS.

L'élément isolant disposé entre l'électrode-pièce P et son posage, tel que la plaque isolante J pourra dans certaines applications être supprimé.

L'électrode-outil F pourra être constituée par un autre type d'outil qu'un fil, par exemple une tige creuse ou non, rotative ou fixe, une pièce métallique d'enfonçage.

Les deux sources de tension/courant U1 et U2 pour l'amorçage et pour l'entretien des décharges érosives pourraient être intégrées dans un seul générateur de tension et/ou courant permettant deux modes de fonctionnement différents.

**Revendications**

1. Dispositif d'usinage par électroérosion comprenant une électrode-outil (F) et une électrode-pièce (P) constituant les pôles d'un gap d'usinage (G), au moins une source (U1) de tension/courant reliée par un circuit électrique (E) à l'électrode-outil (F) et à l'électrode-pièce (P) et agencée pour générer des impulsions électriques et pour établir l'amorçage de décharges électriques entre l'électrode-outil (F) et l'électrode-pièce (P), **caractérisé par le fait qu'**il comprend au moins un élément capacitif (C1), agencé à l'intérieur de l'une ou des deux têtes d'usinage, de préférence à proximité ou dans les contacts (W1, W2) prévus entre ledit circuit électrique (E) et l'électrode-outil (F), branché en série entre la source (U1) et l'un des pôles du gap d'usinage (G) et dont les caractéristiques sont telles qu'il empêche les composantes continues des impulsions électriques provenant de la source (U1) d'être appliquées au gap d'usinage (G) et de laisser passer les composantes à courant variable provenant de la source (U1), et qu'il réduit la capacité totale (Ceq) dudit circuit électrique (E) par rapport au gap d'usinage (G).

2. Dispositif d'usinage selon la revendication 1, **caractérisé par le fait qu'**il comprend un second élément capacitif (C5) connecté en série entre un second pôle (P2) de la première source (U1) et agencé à proximité de l'électrode-pièce (P).

3. Dispositif d'usinage selon la revendication 1 ou 2, **caractérisé par le fait que** l'électrode -pièce (P) est montée sur un posage (T) par l'intermédiaire d'un isolant (J).

4. Dispositif d'usinage selon la revendication 1 ou 2, **caractérisé par le fait qu'**il comprend au moins un interrupteur (SW3, SW4) agencé aux bornes du ou des éléments capacitifs (C1, C5) et destiné à court-circuiter ou à rendre actif l'élément capacitif aux bornes duquel il est agencé.

**5.** Dispositif d'usinage selon la revendication 1, **caractérisé par le fait que** l'électrode -outil est un fil (F) et **par le fait que** l'élément capacitif (C1) est constitué par un guide-fil (WG) dont une partie en contact avec le fil (F) est en matière isolante et dont une autre partie est en matière conductrice.

**6.** Dispositif d'usinage selon l'une des revendications précédentes, **caractérisé par le fait que** la source (U1) comprend un dispositif de mise en court-circuit pour produire des impulsions électriques à pente d'accroissement de tension élevée.

**7.** Dispositif d'usinage selon l'une des revendications précédentes, **caractérisé par le fait que** la source (U1) est agencée de façon à produire des impulsions électriques avec une fréquence comprise entre 0,1 et 10 Mhz, avec une amplitude en tension comprise entre 60 et 300 V et avec une pente d'accroissement positif ou négatif de la tension comprise entre 0,1 et 5 V/nS.

**8.** Dispositif d'usinage selon l'une des revendications précédentes, **caractérisé par** un élément de self inductance (Lm) branché galvaniquement aux deux pôles du gap d'usinage (G).

**9.** Dispositif d'usinage selon la revendication 8, **caractérisé par le fait que** la valeur de l'inductance dudit élément de self inductance (Lm) est choisie de façon que la fréquence de résonance (Fo) du circuit électrique soit petite par rapport à la fréquence des impulsions électriques de la première source (U1).

**10.** Dispositif d'usinage selon la revendication 9, **caractérisé par le fait que** la valeur de ladite inductance (Lm) est choisie de façon que le rapport entre la fréquence des impulsions électriques et la fréquence de résonance (Fo) est compris entre 10 et 500, de préférence entré 50 et 150.

**11.** Dispositif d'usinage selon la revendication 10, **caractérisé par** une source de tension continue réglable (Sm) branchée en série avec l'élément de self inductance (Lm) entre les deux pôles du gap d'usinage (G).

**12.** Dispositif d'usinage selon la revendication 10 ou 11, **caractérisé par** un interrupteur (SW5) branché en série avec l'élément de self inductance (Lm) entre les deux pôles du gap d'usinage (G).

**Claims**

**1.** Electrical discharge machining device comprising a tool electrode (F) and a workpiece electrode (P) forming the poles of a machining gap (G), at least one Voltage/current source (U1) connected by an electrical circuit (E) to the tool electrode (F) and to the workpiece electrode (P) and configured for generating electrical pulses and for establishing the initiation of electrical discharges between the tool electrode (F) and the workpiece electrode (P), **characterized in that** it comprises at least one capacitive element (C1), arranged inside one or both of the machining heads, preferably close to or within the contacts (W1, W2) located between said electrical circuit (E) and the tool electrode (F), connected in series between the source (U1) and one of the poles of the machining gap (G) and whose characteristics are such that it prevents the DC components of the electrical pulses coming from the source (U1) from being applied across the machining gap (G) and allows the variable current components coming from the source (U1) to flow, and such that it reduces the total capacitance (Ceq) of said electrical circuit (E) with respect to the machining gap (G).

**2.** Machining device according to Claim 1, **characterized in that** it comprises a second capacitive element (C5) connected in series to a second pole (P2) of the first source (U1) and arranged close to the workpiece electrode (P).

**3.** Machining device according to either of Claims 1 and 2, **characterized in that** the workpiece electrode (P) is mounted on a holder (T) via an insulator (J).

**4.** Machining device according to either of Claims 1 and 2, **characterized in that** it comprises at least one switch (SW3, SW4) installed across the terminals of the capacitive element or elements (C1, C5) and designed to short-circuit or to render active the capacitive element across whose terminals it is installed.

**5.** Machining device according to Claim 1, **characterized in that** the tool electrode is a wire (F) and **in that** the capacitive element (C1) is formed by a wire guide (WG) one part of which, in contact with the wire (F), is made of insulating material and another part of which is made of conducting material.

6. Machining device according to one of the preceding claims, **characterized in that** the source (U1) comprises a short-circuiting device for producing electrical pulses with steep voltage rising edge slopes.

7. Machining device according to one of the preceding claims, **characterized in that** the source (U1) is configured so as to produce electrical impulses with a frequency in the range 0.1 to 10 MHz, with a voltage amplitude in the range 60 to 300 V and with a positive or negative voltage rising edge slope in the range 0.1 to 5 V/nS.

8. Machining device according to one of the preceding claims, **characterized by** a self-inductance element (Lm) galvanically connected to the two poles of the machining gap (G).

9. Machining device according to Claim 8, **characterized in that** the inductance value of said self-inductance element (Lm) is chosen such that the resonance frequency (Fo) of the electrical circuit is low relative to the frequency of the electrical pulses of the first source (U1).

10. Machining device according to Claim 9, **characterized in that** the value of said inductance (Lm) is chosen such that the ratio of the frequency of the electrical pulses to the resonance frequency (Fo) is in the range 10 to 500, preferably between 50 and 150.

11. Machining device according to Claim 10, **characterized by** an adjustable DC voltage source (Sm) connected in series with the self-inductance element (Lm) between the two poles of the machining gap (G).

12. Machining device according to either of Claims 10 and 11, **characterized by** a switch (SW5) connected in series with the self-inductance element (Lm) between the two poles of the machining gap (G).

## Patentansprüche

1. Vorrichtung zur elektroerosiven Bearbeitung, die eine Werkzeug-Elektrode (F) und eine Bauteil-Elektrode (P), die die Pole eines Bearbeitungsspalts (G) bilden, und mindestens eine Spannungs-/Stromquelle (U1) enthält, die durch einen elektrischen Stromkreis (E) mit der Werkzeug-Elektrode (F) und mit der Bauteil-Elektrode (P) verbunden und angeordnet ist, um elektrische Impulse zu erzeugen und um die Zündung elektrischer Entladungen zwischen der Werkzeug-Elektrode (F) und der Bauteil-Elektrode (P) herzustellen, **dadurch gekennzeichnet, dass** sie mindestens ein kapazitives Element (C1) enthält, das innerhalb des einen oder der zwei Bearbeitungsköpfe angeordnet ist, vorzugsweise in der Nähe der oder in den Kontakten (W1, W2), die zwischen dem elektrischen Stromkreis (E) und der Werkzeug-Elektrode (F) vorgesehen sind, das zwischen der Quelle (U1) und einem der Pole des Bearbeitungsspalts (G) in Reihe geschaltet ist und dessen Eigenschaften so sind, dass es das Anlegen der Gleichstromkomponenten der von der Quelle (U1) kommenden elektrischen Impulse an den Bearbeitungsspalt (G) verhindert und die von der Quelle (U1) kommenden Wechselstromkomponenten durchlässt, und dass es die Gesamtkapazität (Ceq) des elektrischen Stromkreises (E) bezüglich des Bearbeitungsspalts (G) verringert.

2. Bearbeitungsvorrichtung nach Anspruch 1, **dadurch gekennzeichnet, dass** sie ein zweites kapazitives Element (C5) enthält, das mit einem zweiten Pol (P2) der ersten Quelle (U1) in Reihe verbunden und in der Nähe der Bauteil-Elektrode (P) angeordnet ist.

3. Bearbeitungsvorrichtung nach Anspruch 1 oder 2, **dadurch gekennzeichnet, dass** die Bauteil-Elektrode (P) mittels einer Isolierung (J) auf einen Untersatz (T) montiert ist.

4. Bearbeitungsvorrichtung nach Anspruch 1 oder 2, **dadurch gekennzeichnet, dass** sie mindestens einen Schalter (SW3, SW4) enthält, der an den Klemmen des oder der kapazitiven Elemente (C1, C5) angeordnet und dazu bestimmt ist, das kapazitive Element kurzzuschließen oder zu aktivieren, an dessen Klemmen er angeordnet ist.

5. Bearbeitungsvorrichtung nach Anspruch 1, **dadurch gekennzeichnet, dass** die Werkzeug-Elektrode ein Draht (F) ist, und dass das kapazitive Element (C1) aus einer Drahtführung (WG) besteht, von der ein mit dem Draht (F) in Kontakt stehender Teil aus Isoliermaterial ist und von der ein anderer Teil aus leitendem Material ist.

6. Bearbeitungsvorrichtung nach einem der vorhergehenden Ansprüche, **dadurch gekennzeichnet, dass** die Quelle (U1) eine Kurzschlussvorrichtung enthält, um elektrische Impulse mit hoher Spannungszunahmesteilheit zu erzeugen.

7. Bearbeitungsvorrichtung nach einem der vorhergehenden Ansprüche, **dadurch gekennzeichnet, dass** die Quelle (U1) eingerichtet ist, um elektrische Impulse mit einer Frequenz zwischen 0,1 und 10 MHz, mit einer Spannungsamplitude zwischen 60 und 300 V und mit einer positiven oder negativen Zunahmesteilheit der Spannung zwischen 0,1 und 5 V/nS zu erzeugen.

8. Bearbeitungsvorrichtung nach einem der vorhergehenden Ansprüche, **gekennzeichnet durch** ein Selbstinduktionselement (Lm), das galvanisch mit den zwei Polen des Bearbeitungsspalts (G) verbunden ist.

9. Bearbeitungsvorrichtung nach Anspruch 8, **dadurch gekennzeichnet, dass** der Wert der Induktivität des Selbstinduktionselements (Lm) so gewählt wird, dass die Resonanzfrequenz (Fo) des elektrischen Stromkreises im Vergleich mit der Frequenz der elektrischen Impulse der ersten Quelle (U1) klein ist.

10. Bearbeitungsvorrichtung nach Anspruch 9, **dadurch gekennzeichnet, dass** der Wert der Induktivität (Lm) so gewählt wird, dass das Verhältnis zwischen der Frequenz der elektrischen Impulse und der Resonanzfrequenz (Fo) zwischen 10 und 500, vorzugsweise zwischen 50 und 150 liegt.

11. Bearbeitungsvorrichtung nach Anspruch 10, **gekennzeichnet durch** eine einstellbare Gleichspannungsquelle (Sm), die in Reihe mit dem Selbstinduktionselement (Lm) zwischen den zwei Polen des Bearbeitungsspalts (G) geschaltet ist.

12. Bearbeitungsvorrichtung nach Anspruch 10 oder 11, **gekennzeichnet durch** einen Schalter (SW5), der in Reihe mit dem Selbstinduktionselement (Lm) zwischen den zwei Polen des Bearbeitungsspalts (G) geschaltet ist.

Fig.1

Fig.2a

Fig.2b

Fig.2c

**Fig.2d**

**Fig.2e**

**Fig.2f**

Fig.2g

Fig.2h

Fig.3a

Fig.3b

Fig.4a

Fig.4b

Fig.4c

Fig.5

EP 1 624 991 B1

Fig.6

Fig.7a

Fig.7b

Fig.8a

Fig.8b

Fig.8c

**EP 1 624 991 B1**

## RÉFÉRENCES CITÉES DANS LA DESCRIPTION

**Documents brevets cités dans la description**

- EP 1193016 A2